# EUROPEAN PATENT SPECIFICATION

(11) **EP 2 044 840 B1**
(45) Date of publication and mention of the grant of the patent: **08.12.2010**
(21) Application number: 07019385.9
(22) Date of filing: 03.10.2007
(51) Int. Cl.: A01K 85/16

(54) **Lure balance jig**
Angelköder vom ausgeglichenen Typ
Leurre de pêche équilibré

(43) Date of publication of application: 08.04.2009
(73) Proprietor: Kuusamon Uistin OY, 93600 Kuusamo (FI)
(72) Inventor: Korpua, Paavo, 93600 Kuusamo (FI)
(74) Representative: Heinänen, Pekka Antero

(56) References cited:
- FR-A- 2 882 892
- JP-A- 9 248 094
- JP-A- 2004 173 657
- US-A- 3 769 739

## Description

This invention relates to a fishing lure, such as a balance jig, lure, wobbler etc., which comprises a frame with its fixing elements for a line and a hook with one or more forks, fixed hooks and a tail part with its wings controlling the swimming of the balance jig.

As it is known, one has tried to provide the swimming of the balance jig by a separate tail part of different size and shape.

Document US-A-3 769 739 discloses a metal lure comprising a cylindrical body, a front planar section to attach the leader and an alongate tail section having an open upper surface and a concave cross-section with flared sides.

The frame part of the balance jig is manufactured e.g. of lead casting alloy which is designed to resemble a small fish so that the front part of the frame is made wider and heavier and, correspondingly, the tail end of the frame is made lighter and narrower. The position of the line fixing element in the frame, the size of the tail and the location of the tail in the rear part of the frame provide a sliding lateral motion characteristic of the balance jig when pulling the line some ten centimetres upwards. When the balance jig has been pulled upwards by means of the line when fishing, the balance jig obtains a sliding motion in the direction in which the head of the balance jig is, the motion is created because of the tail. When the balance jig has slid e.g. 30 centimetres to the side, it obtains a lateral vertex, turns because of the heavier head end and the tail in the incoming direction, and returns to the starting point. The fish strikes usually after the balance jig has stopped at the starting point. The swimming of currently known balance jigs in use is a steady sliding lateral motion, imitating a small fish.

The object of the invention is to provide a balance jig which imitates a small injured fish as regards swimming and the flanks of which glint during lateral sliding. The principal characteristics of the invention become evident in claim 1. Even though the invention is intended to relate to balance jigs, it can also be applied for other lures, such as wobblers and spoon lures. Preferred embodiments are set out in the dependent claims.

In the following, the invention will be described in detail by means of an embodiment with reference to the accompanying drawings in which
- Fig. 1: shows a side view of a balance jig according to the invention, and
- Fig. 2: shows a top view of the same balance jig, and
- Fig. 3: shows a top view of a tail part, and
- Fig. 4: shows a side view of the same tail part, and
- Fig. 5: shows a rear view of the same tail part.

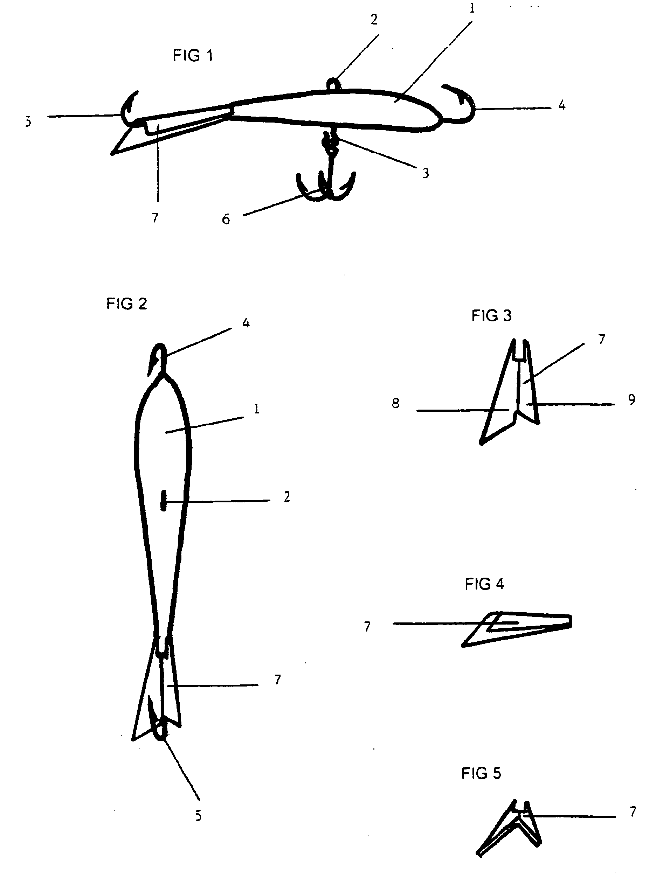

A frame 1 of a balance jig, shown as an example in the embodiment of Figs. 1 and 2, is manufactured by casting of metal or some other material heavier than water, in connection with the casting, a line fixing element 2, a hook fixing element 3, a front hook 4, a rear hook 5, a three-forked hook 6, and a tail 7 have been fixed to the frame.

The swimming of the balance jig is adjusted ready at the factory. It is important that the line fixing element 2 is at the correct position in relation to the longitudinal centre of the balance jig, that the tail 7 is of correct size in relation to the size of the balance jig, and that the tail 7 is installed at a correct angle for obtaining the best swimming motion.

In the invention, one wing of the tail part 7 of the balance jig is made larger than the other, whereby, in connection with fishing when pulling the balance jig from the line, the swimming motion of the jig becomes unsteady and the balance jig starts to swim just like an injured fish glinting its flanks which increases fishability.

In Fig. 3, the tail part 7 is manufactured so that a wing 8 of the tail part 7 has been made larger than a wing 9.

Naturally, the invention is not solely limited to the above-described example, but it can be also applied for other lure types within the scope of the claims, in relation to both shape and material. Also the number of the tail parts is not limited to one, but there can be several and they can be located at any point of the frame. Likewise, their size and shape can vary.

It is well known by those skilled in the art that the different embodiments of the invention are not solely limited to the examples described above, and thus they may vary within the scope of the appended claims.

## Claims

1. A balance jig, which comprises a frame (1) with its fixing elements (2) for a line and a hook, fixed hooks (4, 5) at the front and rear end of the jig, and a tail part (7) which includes wings (8, 9), and which tail part provides a sliding lateral motion for the balance jig, **characterised in that** the wings (8, 9) of the tail part (7) are of different size.

2. A balance jig according to claim 1, **characterised in that** the tail part is of plastic, metal or other material insoluble to water.

3. A balance jig according to claim 1, **characterised in that** the tail part is of the same material as the frame.

4. A balance jig according to claim 1, **characterised in that** the tail part (7) is fixable at different points at the rear end of the frame.

5. A balance jig according to claim 1, **characterised in that** there are two or more tail parts (7) in the same frame, at the rear end of the frame.

6. A balance jig according to claim 1 or 5, **characterised in that** the tail part or tail parts are installable at different angles in relation to the frame.

## Patentansprüche

1. Ausbalancierter Jig (Angelkörper), mit einem Grundkörper (frame, 1) mit seinen Fixier- oder Halteelementen (2) für Leine/Schnur und Haken sowie mit festen Haken (4,5) am vorderen Ende und am hinten Ende des Körpers und mit einem Schwanzteil (7), welcher Flügel oder Fahnen (8,9) besitzt, wobei das Schwanzteil eine gleitende Seitenbewegung des Angelkörpers ermöglicht, **dadurch gekennzeichnet, dass** die Flügel oder Fahnen (8,9) des Schwanzteils (7) von unterschiedlicher Größe sind.

2. Ausbalancierter Jig nach Anspruch 1, **dadurch gekennzeichnet, dass** der Schwanzteil aus Plastik, Metall oder einem anderen, in Wasser unlösbarem Werkstoff ist.

3. Ausbalancierter Jig nach Anspruch 1, **dadurch gekennzeichnet, dass** der Schwanzteil aus dem selben Werkstoff ist, wie der Grundkörper.

4. Ausbalancierter Jig nach Anspruch 1, **dadurch gekennzeichnet, dass** der Schwanzteil (7) an verschiedenen Punkten des hinteren Endes des Grundkörpers fixierbar ist.

5. Ausbalancierter Jig nach Anspruch 1, **dadurch gekennzeichnet, dass** zwei oder mehr Schwanzteile (7) am selben Grundkörper angeordnet sind, am hinteren Ende des Grundkörpers.

6. Ausbalancierter Jig nach Anspruch 1 oder 5, **dadurch gekennzeichnet, dass** der Schwanzteil oder die Schwanzteile in verschiedenen Winkeln relativ zum Grundkörper anbringbar oder einstellbar sind.

## Revendications

1. Leurre de pêche équilibré, qui comprend une armature (1) avec ses éléments de fixation (2) pour une ligne et un hameçon, des hameçons fixes (4, 5) au niveau des extrémités avant et arrière du leurre de pêche, et une partie de queue (7) qui inclut des ailes (8, 9), et laquelle partie de queue fournit un mouvement latéral coulissant pour le leurre de pêche équilibré, **caractérisé en ce que** les ailes (8, 9) de la partie de queue (7) sont de taille différente.

2. Leurre de pêche équilibré selon la revendication 1, **caractérisé en ce que** la partie de queue est en plastique, en métal ou en une autre matière insoluble dans l'eau.

3. Leurre de pêche équilibré selon la revendication 1, **caractérisé en ce que** la partie de queue est de la même matière que l'armature.

4. Leurre de pêche équilibré selon la revendication 1, **caractérisé en ce que** la partie de queue (7) peut être fixée en différents points au niveau de l'extrémité arrière de l'armature.

5. Leurre de pêche équilibré selon la revendication 1, **caractérisé en ce qu'**il y a deux parties de queue (7) ou plus dans la même armature, au niveau de l'extrémité arrière de l'armature.

6. Leurre de pêche équilibré selon la revendication 1 ou 5, **caractérisé en ce que** la partie de queue ou les parties de queue peuvent être disposées selon différents angles par rapport à l'armature.
